## Europäisches Patentamt

## European Patent Office

## Office européen des brevets

(11) Veröffentlichungsnummer: **0 199 237**
**A2**

(12) # EUROPÄISCHE PATENTANMELDUNG

(21) Anmeldenummer: **86105088.8**

(22) Anmeldetag: **14.04.86**

(51) Int. Cl.⁴: **G 11 B 23/04**

(30) Priorität: **25.04.85 DE 3514967**

(43) Veröffentlichungstag der Anmeldung:
**29.10.86 Patentblatt 86/44**

(84) Benannte Vertragsstaaten:
**DE FR GB**

(71) Anmelder: **AGFA-GEVAERT Aktiengesellschaft**

**D-5090 Leverkusen 1(DE)**

(72) Erfinder: **Brunner, Hubert**
**Mühlgasse 4a**
**D-8911 Weil(DE)**

(72) Erfinder: **Liepold, August**
**Kaltner Weg 12**
**D-8000 München 70(DE)**

(54) **Sichtfenster von Cassetten.**

(57) Eine Magnetband-Cassette, bestehend aus opakem Kunststoff, enthält erfindungsgemäß ein Sichtfenster mit darin eingeprägter Skalierung, bestehend aus transparentem Kunststoff sowie einem oder mehreren darin feinverteilten fluoreszierenden Kunststoffen, wobei das Verhältnis zwischen Lichtaustrittsfläche und Lichtabsorptionsfläche des Sichtfensters zwischen 1:10 bis 1:2 000 beträgt.

EP 0 199 237 A2

Croydon Printing Company Ltd

0199237

AGFA-GEVAERT                    5090 Leverkusen 1
AKTIENGESELLSCHAFT
Patentabteilung                 Std-kal


Sichtfenster von Cassetten


Die Erfindung betrifft Cassetten für Magnetbänder mit einem opaken Gehäuse und mit mindestens einem Sichtfenster mit Skaleneinteilung.

Um bei Cassetten für Magnetband-Geräte, beispielsweise Compact-Cassetten oder Video-Cassetten, von außen den Bandzustand des rechten und/oder linken Wickels zu kontrollieren, sind bekanntermaßen sowohl in der Cassette wie auch im Abspielgerät aus transparentem Kunststoff bestehende Sichtfenster angebracht.

Bei Compact-Cassetten befinden sich die Sichtfenster im allgemeinen beidseitig, d. h. vorn und hinten mittig zwischen den beiden flanschlosen Wickeln, wobei unterhalb der Sichtfenster eine im Cassetten-Werkstoff eingeprägte Skalierung ausgebildet ist. Bei Video-Cassetten befinden sich die Sichtfenster je nach System ein- oder beidseitig auf der einen oder auf beiden Cassettenhälften, die Skalierung ist im allgemeinen im Fenster eingeprägt, das halbkreisförmig oder kreisförmig ausgebildet ist. Diese bekannten Ausführungen haben den Nachteil, daß die Skalierung sowohl bei Compact-Cassetten wie auch bei Video-Cassetten insbesondere bei ungünstigen Lichtverhältnissen außerordentlich schlecht sichtbar ist.


A-G 5040                        - .  -

0199237

Der Erfindung liegt die Aufgabe zugrunde, diesen Nachteil der schlechten Sichtbarkeit der Skalierung oder anderer Zeichen im Sichtfenster zu beseitigen.

Erfindungsgemäß wird diese Aufgabe gelöst mit Cassetten für Magnetbänder mit einem opaken Gehäuse und mit mindestens einem Sichtfenster mit Skaleneinteilung, wobei das Sichtfenster aus einer transparenten lichtsammelnden Scheibe besteht, die fluoreszierende Farbstoffe enthält und deren Verhältnis von Lichtaustritts- zu Absorptionsfläche 1 : 10 bis 1 : 2 000 beträgt.

Einzelheiten der Erfindung sind den Unteransprüchen und der Beschreibung zu entnehmen.

Durch die erfindungsgemäße Cassette wird eine ausgezeichnete Sichtbarkeit der im Sichtfenster eingeprägten Skalierung oder anderer Zeichen selbst bei ungünstigen Lichtverhältnissen bewirkt. Sie kommt dadurch zustande, indem das im Sichtfenster eingefangene Licht an im transparenten Kunststoff feinverteilten fluoreszierenden Stoffen absorbiert wird, wobei ein großer Teil des emittierten Fluoreszenz-Lichtes an den Außenflächen des Sichtfensters ins Innere zurück totalreflektiert wird, so daß nur an den Stellen, in denen der Auftreffwinkel auf die Außenfläche den Grenzwinkel der Totalreflexion unterschreitet, wie zum Beispiel an eingeprägten oder erhabenen Markierungen oder an bedruckten Stellen, der Lichtaustritt erfolgen kann. Dadurch wird der Helligkeitskontrast gegenüber einem Sichtfenster, das keine der eben beschriebenen lichtsammelnden Eigenschaften hat, wesentlich erhöht. Die Sichtbarkeit der Skalierung kann noch weiter dadurch erhöht werden, indem die geprägten Stellen rückseitig verspiegelt oder mit einem streuenden Medium, z. B. $TiO_2$-Pulver, belegt werden.

A-G 5040

Entscheidend ist für die Auswahl des Sichtfenstermaterials und der darin verteilten Fluoreszenz-Farbstoffe, daß das in das Sichtfenster einfallende diffuse Licht von dem fluoreszierenden Stoff mit hoher Quantenausbeute absorbiert und der größte Teil des emittierten Fluoreszenz-Lichtes möglichst verlustlos, d. h. weitgehend frei von Absorption und Lichtaustritt im Sichtfenster totalreflektiert wird und nur an den geprägten Stellen oder an den Kanten austritt. Der Verlustfaktor V des nicht-totalreflektierten Lichtes errechnet sich aus der Formel $V = 1 - \frac{\sqrt{n^2 - 1}}{n}$. Für Kunststoff mit dem Brechungsindex n = 1,49 beträgt der Verlustfaktor V = 25 %. Dies bedeutet, daß 75 % des Fluoreszenz-Lichtes im Sichtfenster totalreflektiert werden.

Der "Helligkeitsverstärkungsfaktor", d. h. der Faktor, der die Anhebung der Leuchtdichte der Austrittsflächen in der Sichtfensterscheibe gegenüber der Leuchtdichte eines Farbanstrichs mit dem gleichen Fluoreszenzstoff, wie im Sichtfenster enthalten, angibt, ist im wesentlichen gegeben durch das Verhältnis von Austrittsfläche des Fluoreszenz-Lichtes zur lichtabsorbierenden Fläche der Sichtfensterscheibe, wobei dieses Verhältnis erfindungsgemäß zwischen 1 : 10 bis 1 : 2 000 beträgt.

Werkstoffe, die als Material für das transparente Sichtfenster geeignet sind, gibt es in großer Anzahl, beispielsweise Polystyrol, Mischpolymerisat von Polystyrol mit Butadien und Acrylnitril oder Acrylestern, Hart-PVC, Celluloseester, Polymethylmetacrylat, Polymethylacrylat, Polydiethylenglycol-Diallyl-Biscarbonat, Polyamid oder Polycarbonat. In diese Kunststoffe können in an sich bekannter Weise Fluoreszenzstoffe in fein verteilter Form eingebracht werden.

A-G 5040

Fluoreszierende Farbstoffe, die zum Einsatz in der Cassette mit dem erfindungsgemäßen Sichtfenster geeignet sind, müssen die Bedingung der Lichtechtheit erfüllen. Derartige Fluoreszenzfarbstoffe sind in den letzten Jahren aus zahlreichen Veröffentlichungen bekannt, z. B. EP 4 655, EP 33 079, EP 46 164, EP 46 861, EP 73 007, EP 77 496 sowie die DE-OS 24 51 782, DE-OS 28 15 031, DE-OS 28 51 513, DE-OS 29 34 541, DE-OS 29 52 228, DE-OS 30 01 877, DE-OS 31 10 959, DE-OS 31 36 894, DE-OS 31 49 620, DE-OS 32 35 526.

Geeignet für den Einsatz im erfindungsgemäßen Sichtfenster sind alle lichtechten Fluoreszenz-Farbstoffe, bei denen die Emissionsbande des emittierten Lichtes weitgehend frei ist von Absorption im Sichtfenster. Es können auch Mischungen von Fluoreszenz-Farbstoffen verwendet werden, wenn sie der obigen Bedingung gehorchen, ebenso kann man Fluoreszenz-Farbstoffe mit Farbstoffen, die nicht fluoreszieren, mischen.

Weitere Vorteile der Cassette mit dem erfindungsgemäßen Sichtfenster bestehen darin, daß das Sichtfenster einfach ohne irgendwelche Formänderung herzustellen ist. Jeder Fachmann auf dem Kunststoffgebiet weiß, daß die oben erwähnten Kunststoffe, die als Granulat erhältlich sind, sich sehr leicht in Spritzformen zu Sichtfenstern verarbeiten lassen.

Beim Vergleich zweier Compact-Cassetten, von denen eine ein gemäß der Erfindung lichtsammelndes Sichtfenster, welches fluoreszierende Farbstoffe enthält, aufweist, während die andere Cassette ein an sich bekanntes transparentes Sichtfenster besitzt, ist die wesentlich bessere Sichtbarkeit der Skalierung beim erfindungsgemäßen Sichtfenster deutlich zu erkennen.

A-G 5040

Patentansprüche:

1. Cassette für Magnetbänder mit einem opaken Gehäuse und mit mindestens einem Sichtfenster mit Skaleneinteilung, dadurch gekennzeichnet, daß das Sichtfenster aus einer transparenten lichtsammelnden Scheibe besteht, die fluoreszierende Farbstoffe enthält und deren Verhältnis von Lichtaustritts- zu Absorptionsfläche 1 : 10 bis 1 : 2 000 beträgt.

2. Cassette nach Anspruch 1, dadurch gekennzeichnet, daß das transparente Material aus Polystyrol, Polystyrol mit Butadien und Acrylnitril oder Acrylestern, Hart-PVC, Celluloseester, Polymethylmetacrylat, Polymethylacrylat, Polydiethylen-Diallyl-Biscarbonat, Polyamid oder Polycarbonat besteht, in das ein oder mehrere im sichtbaren Spektralgebiet emittierende Fluoreszenzstoffe, deren emittiertes Licht in der lichtsammelnden Scheibe weitgehend totalreflektiert, aber nur geringfügig absorbiert wird, in feinverteilter Form enthält.

3. Cassette nach den Ansprüchen 1 und 2, dadurch gekennzeichnet, daß im transparenten Sichtfenster eine Mischung von fluoreszierenden und nicht-fluoreszierenden Farbstoffen enthalten ist.

4. Cassette nach den Ansprüchen 1 bis 3, dadurch gekennzeichnet, daß die Skaleneinteilung im Sichtfenster durch Prägung oder Bedruckung enthalten ist.

5. Cassette nach den Ansprüchen 1 bis 4, dadurch gekennzeichnet, daß die geprägte Skaleneinteilung rückseitig verspiegelt oder mit einem streuenden Medium belegt ist.

A-G 5040